# EUROPEAN PATENT SPECIFICATION

(11) **EP 2 284 934 B1**
(45) Date of publication and mention of the grant of the patent: **17.10.2012**
(21) Application number: 10251227.4
(22) Date of filing: 09.07.2010
(51) Int. Cl.: H01M 4/525, C01G 51/00, H01M 10/052

(54) **Electrode assembly and lithium secondary battery including the same**
Elektrodenanordnung und Lithium-Sekundärbatterie dieselbe umfassend
Ensemble d'électrodes et batterie secondaire au lithium le comprenant

(30) Priority: 10.07.2009 KR 20090063122
(43) Date of publication of application: 16.02.2011
(73) Proprietor: Samsung SDI Co., Ltd., Gyeonggi-do (KR)
(72) Inventor: Yi, Seung-Beob, Suwon-si, Gyeonggi-do (KR)
(74) Representative: Mounteney, Simon James

(56) References cited:
- EP-A1- 1 598 884
- EP-A2- 1 321 994
- JP-A- 2000 200 607
- US-A1- 2007 117 014
- US-A1- 2007 224 505
- US-A1- 2008 118 847
- G.T.K. FEY ET AL.: "Electroanalytical and thermal stability studies of multi-doped lithium nickel cobalt oxides" JOURNAL OF POWER SOURCES, vol. 119-121, 1 June 2003 (2003-06-01), pages 658-663, XP004430249 ISSN: 0378-7753 DOI: 10.1016/S0378-7753(03)00201-5
- B.V.R. CHOWDARI ET AL.: "Cathodic behavior of (Co, Ti, Mg)-doped LiNiO2" SOLID STATE IONICS, vol. 140, no. 1-2, 1 March 2001 (2001-03-01), pages 55-62, XP004232138 ISSN: 0167-2738 DOI: 10.1016/S0167-2738(01)00686-5

## Description

### BACKGROUND OF THE INVENTION

### 1. Field of the Invention

The present invention relates to electrode assemblies and secondary batteries having the same.

### 2. Description of the Related Art

In recent years, the rapid development of small and lightweight portable electronic devices has generated an increasing need for high-capacity, small-sized batteries. In particular, lithium ion secondary batteries can provide an operating voltage of at least about 3.6 V, which is about 3 times higher than the nickel-cadmium batteries or nickel-hydrogen batteries widely used as power sources in portable electronic devices. In addition, lithium ion secondary batteries have a higher energy density per unit weight than nickel-cadmium batteries or nickel-hydrogen batteries. For these reasons, research into lithium ion secondary batteries has rapidly progressed.

In a lithium ion secondary battery, electrical energy is generated due to oxidation and reduction reactions which occur when lithium ions are intercalated/deintercalated at positive and negative electrodes. The lithium ion secondary battery uses materials capable of reversibly intercalating/deintercalating lithium ions as the positive and negative electrode active materials, and is manufactured by providing an organic electrolyte or polymer electrolyte between the positive and negative electrodes.

A typical example of the positive electrode active material used in conventional lithium secondary batteries is LiCoO₂, which has high energy density and high voltage. However, LiCoO₂ exhibits deteriorated discharge efficiency as the C-rate increases, thereby reducing battery capacity as the number of charge and discharge cycles increases.

US 2008118847 discloses a rechargeable lithium battery including a positive electrode including a positive active material, a negative electrode including a negative active material, and a non-aqueous electrolyte. The positive active material includes a core and a coating layer formed on the core.

EP1598884 discloses a non-aqueous electrolyte secondary battery comprising a positive electrode containing a positive electrode active material, a negative electrode containing a negative electrode active material, and a nonaqueous electrolyte, characterized In that the positive electrode active material is composed -of a lithium transition metal oxide having a layer structure and containing Li and Co and further contains a group IVA element and group IIA element of the periodic table.

US2007224505 discloses a non-aqueous secondary battery containing a positive electrode having a positive electrode mixture layer, a negative electrode, and a non-aqueous electrolyte, in which the positive electrode comprises, as active materials, three or more lithium-containing transition metal oxides having different average particle sizes.

US2007117014 discloses a cathode active material for a lithium ion secondary battery that comprises a particulate lithium cobalt composite oxide.

EP1321994 discloses a positive electrode active material for a lithium ion secondary battery, Including lithium-transition metal composite oxide of a layer crystal structure.

JOURNAL OF POWER SOURCES, vol. 119-121 1 June 2003, pages 658-663 discloses various multi-doped lithium nickel cobalt oxides for use in a secondary battery.

SOLID STATE IONICS, vol. 140, no. 1-2, 1 March 2001, pages 55-62 discloses various doped lithium nickel oxides for use In a secondary battery.

JP2000200607 discloses a lithium secondary battery using a lithium-transition metal compound oxide as a positive-electrode active material.

### SUMMARY OF THE INVENTION

The present invention sets out to provide a lithium secondary battery that exhibits excellent discharge efficiency, even with increases in the C-rate.

The present invention also sets out to provide a lithium secondary battery that is capable of preventing decreases in battery capacity resulting from deteriorated discharge efficiency.

According to an aspect of the present invention, there is provided an electrode assembly as set out in claim 1. Preferred features of this aspect are set out in claims 2 to 6.

According to another aspect of the present invention, there is provided a lithium secondary battery as set out in claim 7. Preferred features of this aspect are set out in claim 8.

The above and other features of the invention are set out in the appended claims.

### BRIEF DESCRIPTION OF THE DRAWINGS

Embodiments are described in further detail below with reference to the accompanying drawings. It should be understood that various aspects of the drawings may have been exaggerated for clarity and ease of explanation:

FIG. 1 is an exploded perspective view of an electrode assembly according to an embodiment of the present invention;

FIG. 2 is a graph illustrating the capacity retention rate according to the number of charge and discharge cycles of the lithium batteries prepared according to Examples 1-5; and

FIG. 3 is a cross-sectional view of a lithium secondary battery according to the present invention.

### DETAILED DESCRIPTION

Embodiments of the present invention will now be described with reference to the accompanying drawings. In the drawings, certain parameters (such as, e.g., the lengths or thicknesses of layers and regions) may be exaggerated for clarity and ease of explanation, and the same reference numerals are used to denote like elements.

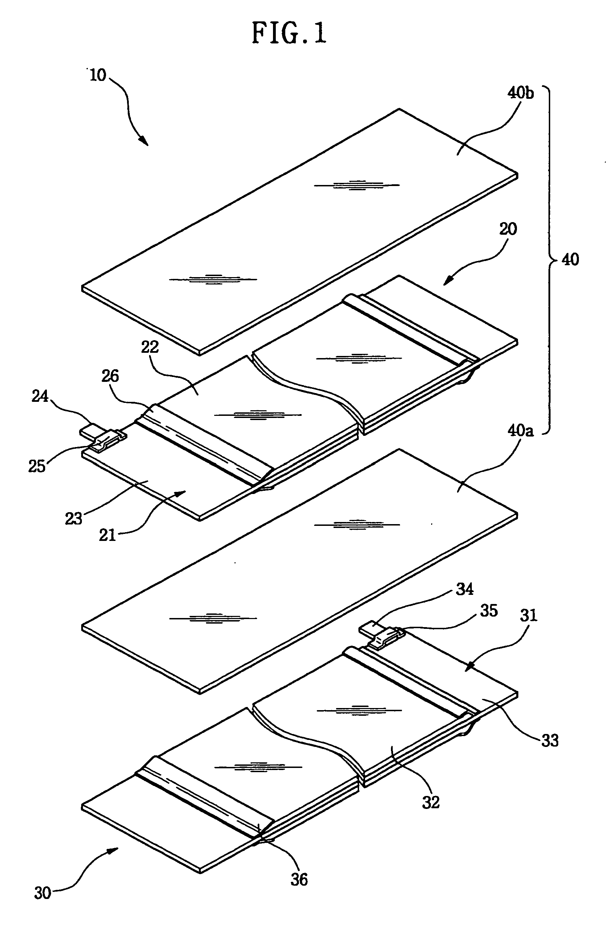

FIG. 1 is an exploded perspective view of an electrode assembly according to an embodiment of the present invention. Referring to FIG. 1, an electrode assembly 10 includes a first electrode 20 ("positive electrode"), a second electrode 30 ("negative electrode"), and a separator 40. The electrode assembly 10 is formed in the shape of a jelly-roll by stacking the positive electrode 20, the negative electrode 30, and the separator 40, and winding the stack.

The separator 40 may include a first separator 40a between the positive electrode 20 and the negative electrode 30, and a second separator 40b below or above the two electrodes 20 and 30. The separator may be disposed at a location where the two electrodes 20 and 30 are stacked and wound to prevent a short circuit between the two electrodes 20 and 30.

The positive electrode 20 includes a positive electrode collector 21 and a positive electrode coating portion 22. The positive electrode collector 21 collects electrons generated by a chemical reaction and transfers the electrons to an external circuit. The positive electrode coating portion 22 includes a positive electrode slurry including a positive electrode active material coated on one or both surfaces of the positive electrode collector 21.

Further, the positive electrode collector 21 includes a non-coated portion 23 on one or both sides of both ends of the positive electrode collector 21. The non-coated portions are not coated with the positive electrode slurry, and the positive electrode collector in the non-coated portion is exposed.

A positive electrode tab 24 is connected to the non-coated portion 23 of the positive electrode collector 21. The positive electrode tab 24 is a thin plate of nickel or aluminum and transfers electrons collected by the positive electrode collector 21 to an external circuit.

A protection member 25 is formed on an upper surface of a portion of the positive electrode tab 24 where the tab 24 is connected to the positive electrode collector 21. The protection member 25 protects the connected portion of the tab 24 to prevent a short circuit, and may be a heat resistant material such as a polymer resin, e.g., polyester.

The positive electrode 20 further includes an insulating member 26 covering at least one end of the positive electrode coating portion 22. The insulating member 26 may be an insulating tape, and may include an attaching layer and an insulating film attached to one surface of the attaching layer. The shape and material of the insulating member 26 are not limited and any suitable shape and material may be used.

The negative electrode 30 includes a negative electrode collector 31 and a negative electrode coating portion 32. The negative electrode collector collects electrons generated by a chemical reaction and transfers the electrons to an external circuit. The negative electrode coating portion 32 includes a negative electrode slurry including a negative electrode active material coated on one or both surfaces of the negative electrode collector 31.

The negative electrode collector includes a non-coated portion 33 on one or both sides of both ends of the negative electrode collector 31. The non-coated portions are not coated with the negative electrode slurry, and the negative electrode collector in the non-coated portion is exposed.

A negative electrode tab 34 is connected to the non-coated portion 33 of the negative electrode collector. The negative electrode tab 34 is a thin plate of nickel and transfers electrons collected by the negative electrode collector 31 to an external circuit.

A protection member 35 is formed on an upper surface of a portion of the negative electrode tab 34 where the tab 34 is connected to the negative electrode collector 31. The protection member 35 protects the connected portion of the tab 34 to prevent a short circuit, and may be a heat resistant material such as a polymer resin, e.g., polyester.

The negative electrode 30 further includes an insulating member 36 covering at least one end of the negative electrode coating portion 32. The insulating member 36 may be an insulating tape, and may include an attaching layer and an insulating film attached to one surface of the attaching layer. The shape and material of the insulating member 36 are not limited and any suitable shape and material may be used.

A resin layer such as polyethylene, polypropylene, etc., or a porous layer formed by the combination of a ceramic material and a binder may be used as the separator 40, but the material of the separator is not limited thereto.

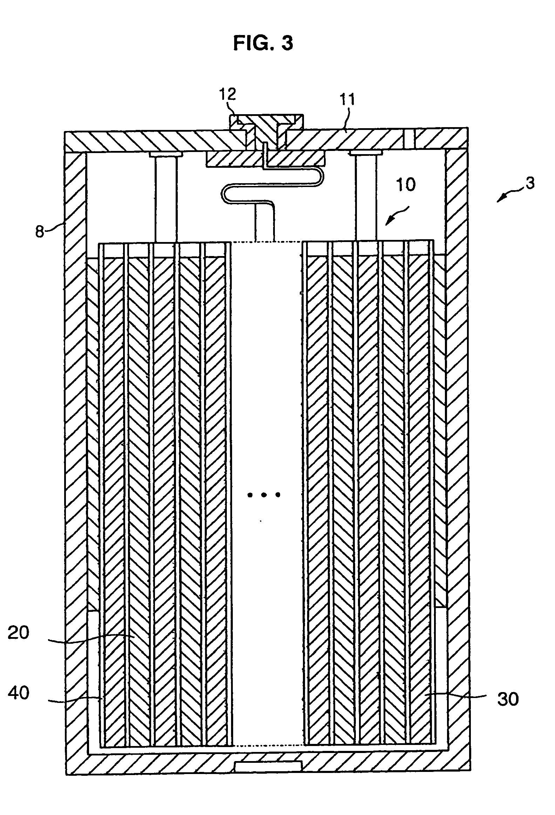

Figure 3, shows a secondary battery 3 according to the invention. This secondary battery includes the electrode assembly 10. The electrode assembly 10 is housed in a battery case 8, and sealed with a cap plate 11 and sealing gasket 12. An electrolyte is then injected into the battery case to complete the battery.

As described above, the positive electrode 20 includes the positive electrode collector 21 having the positive electrode coating portion 22 on which the positive electrode active materials are coated. Nonlimiting examples of suitable materials for the positive electrode current collector include aluminum and aluminum alloys. The positive electrode active material includes a lithium composite oxide represented by Formula 1.

**Formula 1** LiCo_{1-x-y}MgₓTi_{y}O₂

In Formula 1, 0.0056≤x≤0.0089, and 0.0029≤y≤0.0045.

According to one embodiment, the positive electrode active material includes a lithium composite oxide represented by Formula 2.

**Formula 2** LiCo_{1-x-y}MgₓTi_{y}O₂

In Formula 2, 0.0072≤x≤0.0089, and 0.0037≤y≤0.0045.

The lithium composite oxide represented by Formula 1 includes lithium cobalt oxide doped with Mg and Ti, which reduces decreases in capacity (according to C-rate), which decreases are caused by increased polarity at the active material interface, which increased polarity results from reduced specific surface area of the active material during charge and discharge. This significantly reduces lifespan deterioration. That is, the Mg and Ti dopants reduce volume expansion of the positive electrode active material, making it structurally stable during charge and discharge, thereby improving capacity and lifespan. Moreover, the lithium composite oxide represented by Formula 1 improves conductivity of the lithium ions, and reduces the polarity at the active material interface generated in proportion to C-rate, thereby improving capacity characteristics according to C-rate.

A method of fabricating the lithium composite oxide represented by Formula 1 will now be described.

First, a Li source and a Co source are mixed and annealed to synthesize a lithium cobalt oxide (LiCoO₂). Li₂CO₃ and Co₃O₄ may be used as the Li source and the Co source, respectively, and the mixing process may be performed using zirconia balls in a ball mill.

Considering that lithium is volatile during the mixing process, the amount of Li and Co may be selected to satisfy a mole ratio of Li:Co=1:1, Li:Co=1.025:1, Li:Co=1.05:1, etc. The mixing process using the ball mill may be performed for about one hour to about 4 hours at a speed of about 100 RPM.

After completing the mixing process, a first annealing process is performed at a temperature of about 450°C for about one hour, and then a second annealing process is performed at a temperature of about 950°C for about four hours to synthesize a lithium cobalt oxide.

The particle size (particle size distribution with D50 value) of the lithium cobalt oxide (LiCoO₂) may be about 10µm to about 14µm. That is, the lithium cobalt oxide (LiCoO₂) with a particle size distribution of D50 may have a particle size of about 10µm to about 14µm.

The "particle size distribution of D50" is a well known term and refers to a value corresponding to 50% of the largest value of a cumulative distribution of measured values of a particle size analyzer.

The above method for making a lithium cobalt oxide is not intended to limit the present invention, and the lithium cobalt oxide may be synthesized by any suitable method.

After synthesizing the lithium cobalt oxide, a process of adding the Mg and Ti sources into the lithium cobalt oxide and mixing the result is performed. TiO₂ and MgCO₃ may be used as the Mg source and the Ti source, respectively, and the mixing process may be performed using zirconia balls in a ball mill. The mixing process using the ball mill may be performed for about one hour to about four hours at a speed of about 100 RPM.

After completing the mixing process, a plastic process is performed to fabricate a lithium composite oxide. During the plastic process, an annealing process may be performed at a temperature of about 800°C to about 1100°C for about 20 to about 40 hours. In one embodiment, for example, the annealing process is performed at a temperature of about 1000°C to about 1050°C for about 30 to about 35 hours.

The content of each of Mg and Ti in the lithium composite oxide may be about 0.14 wt% to about 0.22 wt% with respect to 100 wt% of the lithium composite oxide. When the content of Mg or Ti exceeds about 0.14 wt% to about 0.22 wt%, capacity characteristics according to C-rate may deteriorate.

In some embodiments, the content of each of Mg and Ti in the lithium composite oxide may be about 0.18 wt% to about 0.22 wt% with respect to 100 wt% of the lithium composite oxide. When the content of Mg or Ti exceeds about 0.18 wt% to about 0.22 wt%, the capacity retention ratio may deteriorate.

The content of Mg and Ti in a final powder of a lithium composite oxide prepared as above was analyzed using ICP-AES.

As described above, the negative electrode 30 includes the negative electrode collector 31 on a portion of which the negative active materials 32 are coated. Nonlimiting examples of suitable materials for the negative electrode collector include copper and copper alloys. Nonlimiting examples of suitable materials for the negative active material include carbon-based negative electrode active materials (such as carbon composites, crystalline, or amorphous carbon), and metal-based negative electrode active materials (including metals that can be alloyed with lithium). In some embodiments, for example, the negative active material is a metal-based active material.

Metal-based negative electrode active materials reversibly charge and discharge with respect to lithium as do carbon-based materials, but have higher capacities and energy densities, thereby improving capacity and energy density of the negative electrode active material. In addition, such metal-based materials may occlude and discharge more lithium ions than carbon-based materials, enabling fabrication of high capacity batteries.

The metal-based materials may include one or two or more metals that can be alloyed with lithium. Nonlimiting examples of metals that can be alloyed with lithium include Sn, Si, Ge, Cr, Al, Mn, Ni, Zn, Co, In, Cd, Bi, Pb and V. In one embodiment, for example, the metal-based materials include one or two or more metals selected from Si, Sn, Ge, etc., which have high capacities.

According to another embodiment of the present invention, a secondary battery includes an electrode assembly, separator, and an electrolyte. The electrolyte according to embodiments of the present invention may contain a nonaqueous organic solvent, such as carbonates, esters, ethers, or ketones. Nonlimiting examples of suitable carbonates include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and combinations thereof. Nonlimiting examples of suitable esters include butyrolactone (BL), decanolide, valerolactone, mevalonolactone, caprolactone, n-methyl acetate, n-ethyl acetate, n-propyl acetate, and combinations thereof. A nonlimiting example of a suitable ether is dibutyl ether, and a nonlimiting example of a suitable ketone is polymethylvinyl ketone.

When the nonaqueous organic solvent is a carbonate-based organic solvent, a mixture of cyclic carbonates and chain carbonates may be used as the nonaqueous organic solvent. In this case, the cyclic carbonate may be mixed with the chain carbonate in a volume ratio of about 1:1 to about 1:9, and in some embodiments, a volume ratio of 1:1.5 to 1:4, in order to obtain good electrolyte performance.

The electrolyte according to embodiments of the present invention may also include an aromatic hydrocarbon-based organic solvent as an additive to the carbonate-based solvent. The aromatic hydrocarbon-based organic solvent may include an aromatic hydrocarbon-based compound. Nonlimiting examples of suitable aromatic hydrocarbon-based organic solvents include benzene, fluorobenzene, chlorobenzene, nitrobenzene, toluene, fluorotoluene, trifluorotoluene, xylene, and combinations thereof. When the electrolyte further contains the aromatic hydrocarbon-based organic solvent, the carbonate-based organic solvent may be mixed with the aromatic hydrocarbon-based organic solvent in a volume ratio of about 1:1 to about 30:1, in order to obtain good electrolyte performance.

The electrolyte according to embodiments of the present invention may further contain a lithium salt, which functions as a source of lithium ions and enables the basic operation of the lithium ion secondary battery. Nonlimiting examples of suitable lithium salts include LiPF₆, LiBF₄, LiSbF₆, LiAsF₆, LiC10₄, LiCF₃SO₃, LiN(CF₃SO₂)₂, LiN(C₂F_{S}SO₂)₂, LiAlO₄, LiAlCl₄, LiN(CₓF₂ₓ₊₁SO₂)(CyF₂ₓ₊₁SO₂) (here, x and y are natural numbers), LiSO₃CF₃, and combinations thereof.

The lithium salt may be used at a concentration of about 0.6 to about 2.0M, and in some embodiments, about 0.7 to about 1.6M. When the concentration of the lithium salt is less than about 0.6M, the electrolyte has low conductivity and does not exhibit good performance. When the concentration of the lithium salt is greater than about 2.0M, the electrolyte has high viscosity and lithium ion mobility is reduced.

As described above, according to embodiments of the present invention, the positive electrode and the negative electrode are stacked or stacked and wound together with a separator (e.g., a porous layer formed of a ceramic material and a binder) to form an electrode assembly. Thereafter, the electrode assembly is contained in a can or similar case, and the electrolyte is injected into the can, thereby completing fabrication of the lithium ion secondary battery.

The shape of the lithium ion secondary battery formed by the above-described method is not limited and may be, for example, cylindrical, prismatic, or pouch-shaped.

The following Examples are presented for illustrative purposes only, and do not limit the scope of the present invention.

### Example 1

LiCoO₂ was mixed with TiO₂ and MgCO₃, a plastic process was performed on the mixture, and doping was performed on the result such that the content of each of Ti and Mg was 0.14 wt% with respect to 100 wt% of the resulting lithium composite oxide positive active material. Further, polyvinylidene fluoride (PVDF) as a binder, and carbon as a conductive agent were mixed in a weight ratio of 96:2:2 and dispersed in N-methyl-2-pyrrolidone, thereby producing a positive electrode slurry. The positive electrode slurry was coated on a 12µm-thick aluminum foil, dried, and rolled to form a positive electrode.

Lithium was used as a counter electrode, a 16µm-thick film separator formed of polyethylene was used between the fabricated positive electrode and its counter electrode, and a coin-type half cell was fabricated after an electrolyte was injected. The electrolyte was 1.15M LiPF₆ dissolved in a mixed solvent of EC/EMC/FB/DMC in a volume ratio of 3/5/1/1.

### Example 2

The same process as in Example 1 was performed except that doping was performed in order for the content of Mg to be 0.22 wt% with respect to 100 wt% of the lithium composite oxide.

### Example 3

The same process as in Example 1 was performed except that doping was performed in order for the content of each of Ti and Mg to be 0.18 wt% with respect to 100 wt% of the lithium composite oxide.

### Example 4

The same process as in Example 1 was performed except that doping was performed in order for the content of Ti to be 0.22 wt% with respect to 100 wt% of the lithium composite oxide, and in order for the content of Mg to be 0.18 wt% with respect to 100 wt% of the lithium composite oxide.

### Example 5

The same process as in Example 1 was performed except that doping was performed in order for the content of each of Ti and Mg to be 0.22 wt% with respect to 100 wt% of the lithium composite oxide.

### Comparative Example 1

The same process as in Example 1 was performed except that doping was performed in order for the content of each of Ti and Mg to be 0.10 wt% with respect to 100 wt% of the lithium composite oxide.

### Comparative Example 2

The same process as in Example 1 was performed except that doping was performed in order for the content of each of Ti and Mg to be 0.26 wt% with respect to 100 wt% of the lithium composite oxide.

First, in each of the batteries prepared according to Examples 1 to 5, and Comparative Examples 1 and 2, an initial charge capacity and an initial discharge capacity according to wt% of Ti and Mg were measured, and initial charge and discharge efficiency was calculated. Further, discharge capacity per C-rate according to wt% of Ti and Mg was measured, and the measured results were converted into a percentage to calculate discharge efficiency. Here, calculating the discharge efficiency was performed by comparing the initial discharge capacity (0.1C) as the reference discharge capacity with a discharge capacity per C-rate. Also, the discharge capacity per C-rate was measured based on a discharge capacity at 0.1C as the reference discharge capacity. Discharge capacities at 0.2C compared with 0.1C, 0.5C compared with 0.1C, and 1.0C compared with 0.1C were measured. The measured results are shown in the following Table 1.

**Table 1**

| Identification | | Example 1 | Example 2 | Example 3 | Example 4 | Example 5 | Comparative Example 1 | Comparative Example 2 |
|---|---|---|---|---|---|---|---|---|
| Ti/Mg Contents (W%) | | 0.14/ 0.14 | 0.14/ 0.22 | 0.18/ 0.18 | 0.22/ 0.18 | 0.22/ 0.22 | 0.10/0.10 | 0.26/ 0.26 |
| Initial Charge Capacity (0.1C, mAh/g) | | 163.40 | 163.58 | 163.83 | 162.70 | 162.75 | 160.80 | 161.66 |
| Initial Discharge Capacity (0.1C, mAh/g) | | 157.66 | 158.57 | 159.67 | 158.49 | 157.97 | 156.36 | 156.97 |
| Initial Charge and Discharge Efficiency (%) | | 96.49 | 96.94 | 97.46 | 97.41 | 97.06 | 97.24 | 97.10 |
| Discharged at 0.2 C compared with 0.1C | Discharge Capacity (mAh/g) | 154.63 | 155.07 | 156.57 | 155.10 | 154.15 | 152.37 | 153.55 |
| Discharged at 0.2 C compared with 0.1C | Discharge Efficiency (%) | 98.08 | 97.79 | 98.06 | 97.86 | 97.58 | 97.45 | 97.82 |
| Discharged at 0.5 C compared with 0.1C | Discharge Capacity (mAh/g) | 148.22 | 148.82 | 150.90 | 149.28 | 148.19 | 144.45 | 146.85 |
| Discharged at 0.5 C compared with 0.1C | Discharge Efficiency (%) | 94.01 | 93.85 | 94.51 | 94.19 | 93.81 | 92.38 | 93.55 |
| Discharged at 1.0C compared with 0.1C | Discharge Capacity (mAh/g) | 133.36 | 135.34 | 143.27 | 142.13 | 140.39 | 110.56 | 129.50 |
| Discharged at 1.0 C compared with 0.1C | Discharge Efficiency (%) | 84.59 | 85.35 | 89.73 | 89.68 | 88.87 | 70.71 | 82.50 |

Here, 0.1C, 0.2C, 0.5C, 1.0C, etc. represent the value of the charge or discharge current. 1C means charging or discharging a battery at a current equal to the rated current of a battery, and 0.1 C means charging or discharging the battery at a current equal to 1/10 of the rated current of the battery.

For example, when a secondary battery with a rated capacity of 1000 mAh is charged or discharged with a current of 1000 mAh, it is referred to as charged at 1C or discharged at 1C. Here, it is assumed that the charge or discharge is completed within one hour.

When a secondary battery with a rated capacity of 1000 mAh is charged or discharged with a current of 2000 mAh, it is referred to as charged at 2C or discharged at 2C. In such a case, the charge or discharge is completed within 30 minutes.

Moreover, when a secondary battery with a rated capacity of 1000 mAh is charged or discharged with a current of 500 mAh, it is referred to as charged at 0.5C or discharged at 0.5C. In such a case, the charge or discharge is completed within 2 hours.

As above, in order to express charge or discharge of a cell with a predetermined current in a predetermined time, the concept of C-rate is introduced. In such a concept, the amount of current charged or discharged within the same time period may be different from each other, and thus C-rate is also defined as a current capacity ratio per hour. That is, for example, in Table 1, "discharged at 0.2C compared with 0.1C" means that the discharge is performed at 0.2C, and "discharge capacity" is the discharge capacity resulting from discharge at 0.2C. "Discharge efficiency" refers to the discharge capacity resulting from discharge at 0.2C compared with that resulting from discharge at 0.1C (reported as a percentage). Regarding efficiency, it is observed that the discharge at 0.2C may be performed with a greater current than the discharge at 0.1C. This means that discharge may be fully completed within a shorter time period, and as a result, a greater current is discharged within the same time period in the case of discharge at 0.2 C.

Referring to the above Table 1, there is no significant difference in initial charge and discharge efficiency between the Examples and Comparative Examples. Also, it is found that there is no considerable difference in discharge at 0.2C compared with 0.1C between the Examples and Comparative Examples. However, as C-rate increases, the discharge efficiency of the Comparative Examples decreases compared with the Examples. In particular, it is perceived that a discharge efficiency of the discharge at 1.0C compared with 0.1C of the Comparative Examples is significantly decreased compared with the Examples. This means that as C-rate increases to discharge a battery with a greater current (i.e., as consumption of current within the same time period in an electronic apparatus using a secondary battery is increased), battery capacity available for discharge is reduced.

Therefore, in embodiments of the present invention, the content of each of Mg and Ti of the lithium composite oxide may be 0.14 wt% to 0.22 wt% with respect to 100 wt% of the lithium composite oxide.

Next, values of Ti and Mg in Examples 1 to 5 and Comparative Examples 1 and 2 according to wt% were converted into mol%. The converted results are shown in the following Table 2.

**Table 2**

| Identification | wt% (W%) | mol% |
|---|---|---|
| | | |
| | 0.10 W% | 0. 40 mol% |
| Mg | | |
| | | |
| | 0.14 W% | 0. 56 mol% |
| Mg | | |
| | | |
| | 0.18 W% | 0. 72 mol% |
| Mg | | |
| | 0.22 W% | 0. 89 mol% |
| Mg | | |
| | 0.26 W% | 1.05 mol% |
| Mg | | |
| | | |
| | 0.10 W% | 0. 20 mol% |
| Ti | | |
| | | |
| | 0.14 W% | 0. 29 mol% |
| Ti | | |
| | | |
| | 0.18 W% | 0. 37 mol% |
| Ti | | |
| | | |
| | 0.22 W% | 0. 45 mol% |
| Ti | | |
| | | |
| | 0.26 W% | 0. 53 mol% |
| Ti | | |

That is, exemplary lithium composite oxides according to embodiments of the present invention are derived from the values of Ti and Mg in Examples 1 to 5 and Comparative Examples 1 and 2 in mol%, converted from wt%. Therefore, positive electrode active materials of the present invention may be a lithium composite oxide represented by Formula 1:

**Formula 1** LiCo_{1-x-y}MgₓTi_{y}O₂

In Formula 1, 0.0056≤x≤0.0089, and 0.0029≤y≤0.0045.

Capacity retention rates of the lithium batteries using the positive electrode active materials of Examples 1 to 5 were measured. The capacity retention rate was measured by charging the lithium battery to a cut-off voltage of 4.2 V using a constant current/constant voltage (CC/CV) method at a charge/discharge rate of 1C, and discharging the battery to a cut-off voltage of 3 V using CC at a charge/discharge rate of 1C for 500 cycles. In measuring the capacity retention rate, a full-cell was fabricated to measure the rate (as opposed to the coin-type half cell using lithium as a counter electrode). To that end, a positive electrode was fabricated as above with respect to the coin-type half cell. Natural graphite as a negative electrode active material was mixed with styrene-butadiene rubber as a binder, and carboxymethylcellulose as a viscosity enhancing material in a weight ratio of 96:2:2, and dispersed in water to produce a negative electrode slurry. The negative electrode slurry was coated on a 15µm-thick copper foil, dried, and rolled to form a negative electrode.

A 16µm-thick film separator formed of polyethylene (PE) was interposed between the fabricated electrodes, and the resulting stack was wound, compressed, and inserted into a cylindrical can. Afterwards, an electrolyte was injected into the cylindrical can to fabricate a lithium secondary battery.

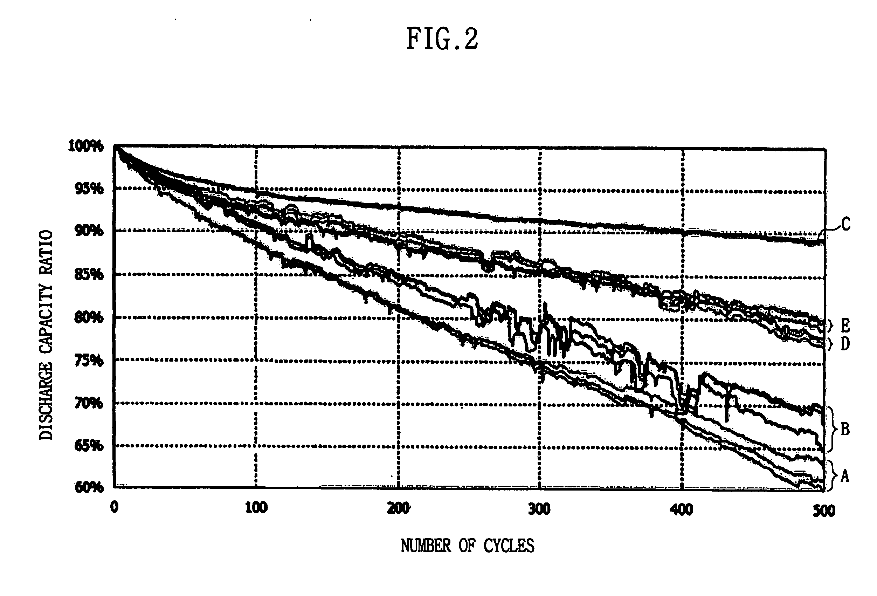

The measured capacity retention rates are shown in FIG. 2. FIG. 2 is a graph illustrating the capacity retention rates of the lithium batteries according to the number of charge and discharge cycles. In FIG. 2, lines A, B, C, D, and E illustrate the capacity retention rates of the lithium batteries using the positive electrode active materials of Examples 1, 2, 3, 4 and 5, respectively.

Referring to FIG. 2, line C corresponds to a lithium battery using a positive electrode active material of Example 3. As shown, a capacity of 90% is maintained at the 400^{th} cycle, and a capacity of about 88% is maintained at the 500^{th} cycle, so that it is observed that the capacity retention rate is good.

Further, lines D and E correspond to lithium batteries using the positive electrode active materials of Examples 4 and 5, respectively. As shown, while capacity at the 500^{th} cycle is less than 80%, capacity at the 300^{th} cycle is 85% or higher, and thus good capacity retention rates are exhibited. Also, capacity at the 400^{th} cycle is 80% or higher, and thus capacity retention rate is good.

Lines A and B correspond to lithium batteries using the positive electrode active materials of Examples 1 and 2, respectively. Here, capacity after the 300^{th} cycle is less than 80%, and thus their capacity retention rates are not as good. Therefore, the content of each of Mg and Ti may be 0.14 wt% to 0.22 wt% with respect to 100wt% of the lithium composite oxide, and more specifically, 0.18wt% to 0.22wt%.

Furthermore, based on the above Table 2 and FIG. 2, in some embodiments of the present invention, the positive electrode active material may be a lithium composite oxide of Formula 2:

**Formula 2** LiCo_{1-x-y}MgₓTi_{y}O₂

In Formula 2, 0.0072≤x≤0.0089, and 0.0037≤y≤0.0045.

The electrode assemblies and lithium secondary batteries according to embodiments of the present invention enable good discharge efficiency even with C-rate increases. Further, the electrode assemblies and lithium secondary batteries according to embodiments of the present invention substantially prevent reductions in battery capacity resulting from battery deterioration, so that lithium secondary batteries with good lifespans can be provided.

## Claims

1. An electrode assembly comprising:
a positive electrode (20) comprising a positive active material;
a negative electrode (30) comprising a negative active material: and
a separator (40) between the positive and negative electrodes,
wherein the positive active material comprises a lithium composite oxide comprising Mg and Ti, wherein each of Mg and Ti is present In the lithium composite oxide in an amount of 0.14wt% to 0.22wt% with respect to 100wt% of the lithium composite oxide.

2. An electrode assembly according to claim 1, wherein the negative active material comprises a material selected from the group consisting of carbon-based negative active materials and metal-based negative active materials.

3. An electrode assembly according to claim 1 or 2, wherein the separator (40) comprises a material selected from the group consisting of polyethylene, polypropylene and combinations of ceramic materials and binders.

4. An electrode assembly according to any preceding claim, wherein each of Mg and Ti is present in the lithium composite oxide in an amount of 0.18wt% to 0.22wt% with respect to 100wt% of the lithium composite oxide.

5. An electrode assembly according to one of Claims 1 to 3 wherein the positive active Material comprises a lithium composite oxide represented by the following formula:
LiCo_{1-x-y}MgₓTi_{y}O₂
wherein 0.0056≤x≤0.0089, and 0.0029≤y≤0.0045.

6. An electrode assembly according to claim 5, wherein 0.0072≤x≤0.0089, and 0.0037≤y≤0.0045.

7. A lithium secondary battery comprising:
an electrode assembly (10) and
an electrolyte;
wherein the electrode assembly (10) is as set out in one of claims 1 to 6.

8. A lithium secondary battery according to claim 7, wherein the electrolyte comprises a nonaqueous organic solvent and a lithium salt.

## Patentansprüche

1. Elektrodenanordnung, umfassend:
eine positive Elektrode (20), die ein positives aktives Material umfasst;
eine negative Elektrode (30), die ein negatives aktives Material umfasst; und
einen Separator (40) zwischen der positiven und der negativen Elektrode,
wobei das positive aktive Material ein Lithium-Verbundoxid umfasst, das Mg und Ti umfasst, wobei Mg und Ti jeweils in einer Menge von 0,14 Gew.-% bis 0,22 Gew.-% in Bezug auf 100 Gew.-% des Lithium-Verbundoxids im Lithium-Verbundoxid vorhanden sind.

2. Elektrodenanordnung nach Anspruch 1, wobei das negative aktive Material ein Material umfasst, das aus der Gruppe bestehend aus kohlenstoftbasierten negativen aktiven Materialien und metallbasierten negativen aktiven Materialien ausgewählt ist.

3. Elektrodenanordnung nach Anspruch 1 oder 2, wobei der Separator (40) ein Material umfasst, das aus der Gruppe bestehend aus Polyethylen, Polypropylen und Kombinationen von keramischen Materialien und Bindemitteln ausgewählt ist.

4. Elektrodenanordnung nach einem vorstehenden Anspruch, wobei Mg und Ti jeweils in einer Menge von 0,18 Gew.-% bis 0,22 Gew.% in Bezug auf 100 Gew.% des Lithium-Verbundoxids im Lithium-Verbundoxid vorhanden sind.

5. Elektrodenanordnung nach einem der Ansprüche 1 bis 3, wobei das positive aktive Material ein Lithium-Verbundoxid umfasst, das durch die folgende Formel repräsentiert ist:
LiCo_{1-x-y}MgₓTi_{y}O₂
, wobei 0,0056 ≤ x ≤ 0,0089 und 0,0029 ≤ y ≤ 0,0045.

6. Elektrodenanordnung nach Anspruch 5, wobei 0,0072 ≤ x ≤ 0,0089 und 0,0037 ≤ y ≤ 0,0045.

7. Lithium-Sekundärbatterie, umfassend:
eine Elektrodenanordnung (10), und
einen Elektrolyten;
wobei die Elektrodenanordnung (10) wie in einem der Ansprüche 1 bis 6 angeführt ist.

8. Lithium-Sekundärbatterie nach Anspruch 7, wobei der Elektrolyt ein nichtwässriges organisches Lösungsmittel und ein Lithiumsalz umfasst.

## Revendications

1. Assemblage d'électrodes comprenant:
une électrode positive (20) comprenant un matériau actif positif;
une électrode négative (30) comprenant un matériau actif négatif; et
un séparateur (40) entre les électrodes positive et négative,
dans lequel le matériau actif positif comprend un oxyde composite de lithium comprenant Mg et Ti, chacun de Mg et Ti étant présent dans l'oxyde composite de lithium en une quantité de 0,14 % en poids à 0,22 % en poids pour 100 % en poids de l'oxyde composite de lithium.

2. Assemblage d'électrodes selon la revendication 1, dans lequel le matériau actif négatif comprend un matériau choisi dans le groupe constitué par les matériaux actifs négatifs à base de carbone et les matériaux actifs négatifs à base de métal.

3. Assemblage d'électrodes selon la revendication 1 ou 2, dans lequel le séparateur (40) comprend un matériau choisi dans le groupe constitué par le polyéthylène, le polypropylène et les combinaisons de matériaux céramiques et de liants.

4. Assemblage d'électrodes selon l'une quelconque des revendications précédentes, dans lequel chacun de Mg et Ti est présent dans l'oxyde composite de lithium en une quantité de 0,18 % en poids à 0,22 % en poids pour 100 % en poids de l'oxyde composite de lithium.

5. Assemblage d'électrodes selon l'une des revendications 1 à 3, dans lequel le matériau actif positif comprend un oxyde composite de lithium représenté par la formule suivante:
LiCo_{1-x-y}MgₓTi_{y}O₂
dans laquelle 0,0056 ≤ x ≤ 0,0089, et 0,0029 ≤ y ≤ 0,0045.

6. Assemblage d'électrodes selon la revendication 5, dans lequel 0,0072 ≤ < ≤ 0,0089, et 0,0037 ≤ y ≤ 0,0045.

7. Batterie rechargeable au lithium comprenant:
un assemblage d'électrodes (10) et
un électrolyte ;
dans laquelle l'assemblage d'électrodes (10) est tel que présenté dans l'une des revendications 1 à 6.

8. Batterie rechargeable au lithium selon la revendication 7, dans laquelle l'électrolyte comprend un solvant organique non aqueux et un sel de lithium.
